# EUROPÄISCHE PATENTANMELDUNG

(11) **EP 2 190 266 A1**
(43) Veröffentlichungstag der Anmeldung: **26.05.2010**
(21) Anmeldenummer: 09176182.5
(22) Anmeldetag: 17.11.2009
(51) Int. Cl.: H05B 35/00, H05B 37/02

(54) **Anordnung und Verfahren zum Schalten einer Lichtquelle**

(30) Priorität: 17.11.2008 DE 102008057742; 18.11.2008 DE 102008057952
(71) Anmelder: Brück, Dietmar F., South Bay Garden, Hong Kong (CN)
(72) Erfinder: Brück, Dietmar F., South Bay Garden, Hong Kong (CN)
(74) Vertreter: Lippert, Stachow & Partner

(57) **Zusammenfassung**

Die Erfindung betrifft eine Anordnung sowie ein Verfahren zum Schalten einer Lichtquelle, bestehend aus mindestens einer Leuchtstofflampe, wie einer PL-Lampe, insbesondere zum unverzögerten Einschalten einer solchen Lichtquelle und zum bedarfsweise zeitverzögerten Ausschalten. Durch die Erfindung soll beim Einschalten von Leuchtstofflampen, insbesondere von PL-Lampen, die volle Helligkeit bei geringst möglicher Zeitverzögerung erreicht werden kann. Erreicht wird das dadurch, dass in unmittelbarer Nähe der Leuchtstofflampe, eine Heizung angebracht ist, die sichtbares Licht ausstrahlt und parallel zur Leuchtstofflampe geschaltet ist, wobei sich zwischen der Leuchtstofflampe und der Energiequelle eine Verzögerungsschaltung befindet. Eine solche Heizung kann eine schnelle elektrische Heizung sein, die gleichzeitig sichtbares Licht erzeugt.

## Beschreibung

Die Erfindung betrifft eine Anordnung sowie ein Verfahren zum Schalten einer Lichtquelle, bestehend aus mindestens einer Leuchtstofflampe, wie einer PL-Lampe, insbesondere zum unverzögerten Einschalten einer solchen Lichtquelle und zum bedarfsweise zeitverzögerten Ausschalten.

Bewegungsmelder werden in vielen öffentlichen und privaten Bereichen eingesetzt, in denen insbesondere Licht bedarfsgerecht unverzögert ein- und zeitverzögert ausgeschaltet werden soll. Bewegungsmelder zum Ansteuern solcher Lichtquellen werden sowohl im Innen- als auch im Außenbereich eingesetzt.

Im Außeneinsatz schalten Bewegungsmelder verschiedene Lampen- und Leuchtentypen, wobei insbesondere normale Glühlampen, sowie Halogenstablampen, z.B. in Halogenstrahlern, verwendet werden. Diese Lampentypen ermöglichen ein sofortiges Einschalten mit voller Helligkeit.

Die Energieeffizienz dieser Lampentypen ist allerdings sehr schlecht und wird wohl dazu führen, dass diese in Zukunft aus energiepolitischen Gründen vom Markt genommen werden.

Alternative Leuchtmittel wären stattdessen Leuchtstofflampen, z.B. PL-Lampen, so genannte Energiesparlampen. Diese Lampen bestehen aus einem evakuierten Glaskolben mit einer speziellen Innenbeschichtung und enthalten eine Gasfüllung aus einem Edelgas. Derartige Lampen benötigen allerdings konstruktionsbedingt eine spezielle Starteinrichtung, wie eine Schnellheizkathode, um eine ausreichende Zündtemperatur zu erreichen, sowie eine bestimmte Mindesttemperatur als Voraussetzung, um in großem Maße Licht zu erzeugen.

Letzteres ist bei normaler Zimmertemperatur, also im Bereich um 20 °C, eigentlich immer gegeben, aber nicht im Außenbereich im Winter bei Umgebungstemperaturen um oder unter dem Gefrierpunkt. Dann ist insbesondere in der Zündphase die Lampenröhre sehr kalt und es bedarf einer längeren Aufwärmphase, um die erforderliche Zünd- und Brenntemperatur zu erreichen. Bis dahin ist die Lichtstärke überwiegend sehr gering.

Das bedeutet, das eigentlich erwartete und benötigte Licht wird nicht sofort und unverzögert mit voller Helligkeit erzeugt.

Das ist pe se kein Problem, z.B. dann, wenn die Leuchte mit einem Dämmerungsschalter die gesamte Dunkel-/Nachtphase hindurch eingeschaltet bleibt. Dieser Aspekt verhindert an sich bis dato den Einsatz von PL-Lampen mit Bewegungsmeldern. Derartige Lampen werden durch den Bewegungsmelder nur bei Bedarf eingeschaltet.

Der Erfindung liegt nun die Aufgabe zugrunde, eine Anordnung sowie ein Verfahren zum unverzögerten Einschalten einer Lichtquelle, wie einer PL-Lampe zu schaffen, mit der die volle Helligkeit einer solchen Lampe, bei geringst möglicher Zeitverzögerung erreicht werden kann.

Erfindungsgemäß wird das bei einer Anordnung der eingangs genannten Art dadurch erreicht, dass in unmittelbarer Nähe der Leuchtstofflampe, eine Heizung angebracht ist, die sichtbares Licht ausstrahlt und parallel zur Leuchtstofflampe geschaltet ist, wobei sich zwischen der Leuchtstofflampe und der Energiequelle eine Verzögerungsschaltung befindet.

Eine solche Heizung kann eine besonders schnelle elektrische Heizung sein, wie eine Infrarotheizung, vorzugsweise eine Halogenstablampe, oder jede andere Halogenlampe, die anteilig Energie sofort in verfügbares Licht und einen noch größeren Energieanteil in Form von Wärmeenergie freisetzt.

Von besonderem Vorteil ist, wenn die Heizung eine schnelle elektrische Heizung ist, die gleichzeitig sichtbares Licht erzeugt.

Die elektrische Heizung kann auch eine Infrarotheizung sein.

In einer Ausgestaltung der Erfindung besteht die Infrarotheizung aus mindestens einem Halogenstab oder einer Halogenlampe mit dem Vorteil, dass sofort ausreichend Licht zur Verfügung steht und die Heizung durch die frei werdende Wärmeenergie kurz danach einsetzt.

In einer weiteren Ausgestaltung der Erfindung ist die Leuchtstofflampe eine PL-Lampe.

In einer vorteilhaften Fortführung der Erfindung ist der PL-Lampe ein Temperatursensor und ein von diesem betätigbarer Schalter zugeordnet, der die PL-Lampe betätigt.

Der Temperatursensor kann ein berührungslos arbeitender Sensor, z.B. ein Thermopile, sein.

Um eine maximale Heizleistung zu erreichen, ist der Halogenstab bzw. die Halogenlampe unterhalb oder hinter der PL-Lampe angeordnet.

Alternativ kann der Halogenstab bzw. die Halogenlampe in einem Parabolspiegel hinter der im Brennpunkt angeordneten PL-Lampe angeordnet sein.

Eine weitere Ausgestaltung der Erfindung ist **dadurch gekennzeichnet, dass** der Halogenstab, bzw. die Halogenlampen bei einer PL-Lampe mit mehreren, parallel zueinander geformten Bögen im Zentrum der Bogengruppe angeordnet ist.

Alternativ kann die Halogenstäbe bzw. die Halogenlampe bei mehreren nebeneinander angeordneten PL-Lampen jeweils hinter diesen angeordnet sein.

Schließlich können die PL-Lampen jeweils mit einem Wärmespeicher in Form einer größeren Masse gekoppelt sein, was ein mineralischer Wärmespeicher sein kann.

Die der Erfindung zugrunde liegende Aufgabe wird ferner durch ein Verfahren dadurch gelöst, dass beim Erzeugen eines Einschaltimpulses für eine Leuchtstoff- oder Pl-Lampe durch eine Schalteinrichtung, insbesondere durch einen konventionellen Bewegungs- oder Präsenzmelder, zunächst der Halogenstab oder die Halogenlampe eingeschaltet wird, so dass sofort Licht und Wärmeenergie zur Verfügung steht, dass nach Ablauf einer Aufwärmzeit die Leuchtstoff- oder PL-Lampe zusätzlich eingeschaltet wird, woraufhin dann der Halogenstab oder die Halogenlampe nach einer vorgegebenen Zeit oder Temperatur der Leuchtstoff- oder PL-Lampe abgeschaltet wird.

In einer besonderen Ausgestaltung des erfindungsgemäßen Verfahrens werden der Halogenstab oder die Halogenlampe zugeschaltet, wenn die Temperatur der PL-Lampe unterhalb einer vorgegebenen Temperatur liegt, die zum Zünden und zum Erreichen der vollen Lichtleistung ausreicht.

Eine weitere Ausgestaltung der Erfindung ist **dadurch gekennzeichnet, dass** die Zeit- und/oder Temperatursteuerung durch einen Mikrocontroller erfolgt.

Die Erfindung soll nachfolgend an einem Ausführungsbeispiel näher erläutert werden.

Beim Einschalten, z.B. durch einen konventionellen Bewegungsmelder, wird zunächst die Halogenlampe eingeschaltet, so dass sofort Licht und Wärmeenergie zur Verfügung steht, so dass gleichzeitig die Lampenröhre der PL-Lampe (oder mehrere gleichzeitig) erwärmt wird. Nach Ablauf einer Aufwärmzeit wird dann die PL-Lampe eingeschaltet, also zusätzlich und zeitverzögert, woraufhin dann nach einer vorgegebenen Zeit oder Temperatur der PL-Lampe die Halogenlampe zwecks Energieeinsparung abgeschaltet wird.

Zur Messung der Temperatur der PL-Lampe kann dieser ein Temperatursensor zugeordnet sein. Der Temperatursensor kann ein berührungslos arbeitender Sensor sein, z.B. ein Thermopile.

Dieser Prozess kann durch einen Mikrokontroller zeit- und/oder temperaturgesteuert werden.

Da Bewegungsmelder wiederholt ein- bzw. ausschalten, bedeutet das Einschalten bei warmer PL-Lampenröhre, dass das Leuchtmittel in erheblichem Maße in den Zündphasen geschont wird und dass damit die Lebensdauer verlängert wird.

Das Einschalten der Halogenlampe kann dann entfallen, wenn die PL-Lampenröhre zum Zeitpunkt des erneuten Einschaltens noch oder bereits eine ausreichende Temperatur aufweist, die zm Zünden ausreicht.

Bezüglich der räumlichen Anordnungen von Halogenstab bzw. Halogenlampe und PL-Lampe sind einige Anordnungen besonders günstig, aber nicht ausschließlich.
a) Der Halogenstab bzw. die Halogenlampe, befindet sich unterhalb der PL-Lampe.
b) Der Halogenstab bzw. die Halogenlampe, befindet sich hinter der PL-Lampe.
c) Der Halogenstab bzw. die Halogenlampe, befindet sich in einem Parabolspiegel hinter der PL-Lampe, z.B. im Brennpunkt.
d) Der Halogenstab, die Halogenlampe befindet sich bei einer PL-Lampe mit mehreren, parallel zueinander geformten Bögen, im Zentrum der Bögengruppe.
e) Der Halogenstab bzw. die Halogenlampe befindet sich bei mehreren PL-Lampen nebeneinander hinter diesen.

Weiterhin können die PL-Lampen mit einem Wärmespeicher, z.B. einer größeren Masse gekoppelt sein, um nach dem Ausschalten eine längere Bereitschaftszeit zu erreichen.

## Patentansprüche

1. Anordnung zum Schalten einer Lichtquelle, bestehend aus mindestens einer Leuchtstofflampe, wie einer Energiesparlampe, vorzugsweise einer PL-Lampe, insbesondere zum unverzögerten Einschalten einer solchen Lichtquelle, die über einen Bewegungsmelder mit einer Energiequelle verbunden ist und zum bedarfsweisen zeitverzögerten Ausschalten, **dadurch gekennzeichnet, dass** in unmittelbarer Nähe der Leuchtstofflampe, eine Heizung angebracht ist, die sichtbares Licht ausstrahlt und parallel zur Leuchtstofflampe geschaltet ist, wobei sich zwischen der Leuchtstofflampe und der Energiequelle eine Verzögerungsschaltung befindet .

2. Anordnung nach Anspruch 1, **dadurch gekennzeichnet, dass** die Heizung eine schnelle elektrische Heizung ist, die gleichzeitig sichtbares Licht erzeugt.

3. Anordnung nach Anspruch 2, **dadurch gekennzeichnet, dass** die elektrische Heizung eine Infrarotheizung ist.

4. Anordnung nach Anspruch 3, **dadurch gekennzeichnet, dass** die Infrarotheizung aus mindestens einem Halogenstab oder einer Halogenlampe besteht.

5. Anordnung nach einem der Ansprüche 1 bis 4, **dadurch gekennzeichnet, dass** die Leuchtstofflampe eine PL-Lampe ist.

6. Anordnung nach Anspruch 5, **dadurch gekennzeichnet, dass** der PL-Lampe ein Temperatursensor und ein von diesem betätigbarer Schalter zugeordnet sind.

7. Anordnung nach Anspruch 6, **dadurch gekennzeichnet, dass** der Temperatursensor ein berührungslos arbeitender Sensor, z.B. ein Thermopile, ist.

8. Anordnung nach einem der Ansprüche 1 bis 7, **dadurch gekennzeichnet, dass** der Halogenstab bzw. die Halogenlampe unterhalb oder hinter der PL-Lampe angeordnet ist.

9. Anordnung nach einem der Ansprüche 1 bis 7, **dadurch gekennzeichnet, dass** der Halogenstab bzw. die Halogenlampe in einem Parabolspiegel hinter der im Brennpunkt angeordneten PL-Lampe angeordnet ist.

10. Anordnung nach einem der Ansprüche 1 bis 9, **dadurch gekennzeichnet, dass** der Halogenstab, bzw. die Halogenlampen bei einer PL-Lampe mit mehreren, parallel zueinander geformten Bögen im Zentrum der Bogengruppe angeordnet ist.

11. Anordnung nach einem der Ansprüche 1 bis 9, **dadurch gekennzeichnet, dass** die Halogenstäbe bzw. die Halogenlampe bei mehreren nebeneinander angeordneten PL-Lampen jeweils hinter diesen angeordnet sind.

12. Anordnung nach einem der Ansprüche 1 bis 11, **dadurch gekennzeichnet, dass** die PL-Lampen jeweils mit einem Wärmespeicher in Form einer größeren Masse gekoppelt sind.

13. Anordnung nach Anspruch 12, **dadurch gekennzeichnet, dass** der Wärmespeicher ein mineralischer Wärmespeicher ist.

14. Verfahren zum Schalten einer Anordnung nach den Ansprüchen 1 bis 13, **dadurch gekennzeichnet, dass** beim Erzeugen eines Einschaltimpulses durch eine Schalteinrichtung, insbesondere durch einen konventionellen Bewegungsmelder, zunächst der Halogenstab oder die Halogenlampe eingeschaltet wird, so dass sofort Licht und Wärmeenergie zur Verfügung erzeugt wird, dass nach Ablauf einer Aufwärmzeit die PL-Lampe zusätzlich eingeschaltet wird, woraufhin dann der Halogenstab oder die Halogenlampe nach einer vorgegebenen Zeit oder Temperatur der PL-Lampe abgeschaltet wird.

15. Verfahren nach Anspruch 14, **dadurch gekennzeichnet, dass** der Halogenstab oder die Halogenlampe zugeschaltet werden, wenn die Temperatur der PL-Lampe unterhalb einer vorgegebenen Temperatur liegt, die zum Zünden und zum Erreichen der vollen Lichtleistung ausreicht.

16. Verfahren nach Anspruch 14 und 15, **dadurch gekennzeichnet, dass** die Zeit- und/oder Temperatursteuerung durch einen Mikrocontroller erfolgt.
